# EUROPEAN PATENT APPLICATION

(11) **EP 2 790 448 A1**
(43) Date of publication of application: **15.10.2014**
(21) Application number: 13738877.3
(22) Date of filing: 06.01.2013
(51) Int. Cl.: H04W 56/00

(54) **METHOD, BASE STATION AND SYSTEM FOR SYNCHRONIZING LTE-TDD NETWORK AND WIMAX NETWORK**

(30) Priority: 18.01.2012 CN 201210016140
(71) Applicant: Huawei Technologies Co., Ltd, Shenzhen, Guangdong 518129 (CN)
(72) Inventor: WANG, Gang, Shenzhen Guangdong 518129 (CN)
(74) Representative: Maiwald Patentanwalts GmbH
(86) International application number: PCT/CN2013/070092
(87) International publication number: WO 2013/107304

(57) **Abstract**

Embodiments of the present invention disclose a method, a base station, and a system for synchronizing an LTE-TDD network and a WiMAX network, so as to achieve synchronization between the LTE-TDD network and the WiMAX network. The method according to the embodiments of the present invention includes: synchronizing the LTE-TDD network and the WiMAX network with a same clock source; determining a frame format of the WiMAX network; determining a half-frame format of the LTE-TDD network according to the frame format of the WiMAX network, and determining a delay time between a frame header of the half-frame format of the LTE-TDD network and a frame header of the frame format of the WiMAX network, so that the LTE-TDD network and the WiMAX network are synchronized.

## Description

This application claims priority to Chinese Patent Application No. 201210016140.9, filed with the Chinese Patent Office on January 18, 2012 and entitled "METHOD, BASE STATION, AND SYSTEM FOR SYNCHRONIZING LTE-TDD NETWORK AND WIMAX NETWORK", which is incorporated herein by reference in its entirety.

### TECHNICAL FIELD

The present invention relates to a wireless communications system, and in particular, to a method, a base station, and a system for synchronizing an LTE-TDD network and a WiMAX network.

### BACKGROUND

With the development of communications technologies, worldwide interoperability for microwave access (WiMAX, Worldwide Interoperability for Microwave Access), as a mobile TDD bandwidth technology, has been widely deployed and applied in the world; meanwhile, a long term evolution (LTE, Long Term Evolution) system supports the time division duplexing (TDD, Time Division Duplexing) technology and, with the maturing LTE-TDD technology, an LTE-TDD network will be gradually deployed and applied.

However, because a WiMAX network and an LTE-TDD network both adopt a TDD time division duplexing system, when a WiMAX network and an LTE-MAX network are deployed in one area at the same time, coexistence performance of the two networks must be considered; especially when the two networks use a same TDD frequency and synchronization is not performed appropriately, mutual interference occurs between the two networks, leading to deteriorating network performance.

### SUMMARY

Embodiments of the present invention provide a method and a base station for synchronizing an LTD-TDD network and a WiMAX network, so as to achieve synchronization between an LTE-TDD network and a WiMAX network on a base station, thereby preventing mutual interference between the networks, and improving system performance.

In an embodiment of the present invention, a method for synchronizing an LTE-TDD network and a WiMAX network includes:
synchronizing an LTE-TDD network and a WiMAX network with a same clock source;
determining a frame format of the WiMAX network; and
determining, according to the frame format of the WiMAX network, a half-frame format of the LTE-TDD network, a delay time between a frame header of the half-frame format of the LTE-TDD network, and a frame header of the frame format of the WiMAX network, so that the LTE-TDD network and the WiMAX network are synchronized.

Preferably, the determining a half-frame format of the LTE-TDD network according to the frame format of the WiMAX network, and determining a delay time between a frame header of the half-frame format of the LTE-TDD network and a frame header of the frame format of the WiMAX network specifically includes:
if a configuration ratio of symbol quantities in a downlink subframe and an uplink subframe of the frame format of the WiMAX network is 35:12, determining that a configuration ratio of subframe quantities in a downlink subframe and an uplink subframe of the half-frame format of the LTE-TDD network is 3:1, that a frame header of the half-frame format of the LTE-TDD network has a delay of 2 ms compared with a frame header of the frame format of the WiMAX network, and that a downlink pilot time slot DWPTS of a special subframe in the half-frame format of the LTE-TDD network has a length smaller than or equal to 9 symbols;
if a configuration ratio of symbol quantities in a downlink subframe and an uplink subframe of the frame format of the WiMAX network is 32:15, determining that a configuration ratio of subframe quantities in a downlink subframe and an uplink subframe of the half-frame format of the LTE-TDD network is 3:1, that a frame header of the half-frame format of the LTE-TDD network has a delay of 2 ms compared with a frame header of the frame format of the WiMAX network, and that a DWPTS of a special subframe in the half-frame format of the LTE-TDD network has a length smaller than or equal to 5 symbols;
if a configuration ratio of symbol quantities in a downlink subframe and an uplink subframe of the frame format of the WiMAX network is 29:18, determining that a configuration ratio of subframe quantities in a downlink subframe and an uplink subframe of the half-frame format of the LTE-TDD network is 2:2, and that a frame header of the frame format of the LTE-TDD network has a 1 ms delay compared with a frame header of a half-frame format of the WiMAX network, and setting a radio frequency channel ending position of a downlink subframe in the WiMAX network at the 27^{th} symbol of the downlink subframe; and
if a configuration ratio of symbol quantities in a downlink subframe and an uplink subframe of the frame format of the WiMAX network is 29:18, determining that a configuration ratio of subframe quantities in a downlink subframe and an uplink subframe of the half-frame format of the LTE-TDD network is 2:2, and that a frame header of the half-frame format of the LTE-TDD network has a 1003.16 µs to 1020.31 µs delay compared with a frame header of the half-frame format of the WiMAX network, and setting the symbol quantity of an uplink pilot time slot of a special subframe in the half-frame format of the LTE-TDD network to 0.

In an embodiment of the present invention, a base station includes:
a first synchronizing unit, configured to synchronize an LTE-TDD network and a WiMAX network with a same clock source;
a determining unit, configured to determine a frame format of the WiMAX network; and
a second synchronizing unit, configured to determine a half-frame format of the LTE-TDD network according to the frame format of the WiMAX network, and determine a delay time between a frame header of the half-frame format of the LTE-TDD network and a frame header of the frame format of the WiMAX network, so that a half-frame of the LTE-TDD network and a frame of the WiMAX network are synchronized.

Preferably, the second synchronizing unit includes:
a first processing unit, configured to: if a configuration ratio of symbol quantities in a downlink subframe and an uplink subframe of the frame format of the WiMAX network is 35:12, determine that a configuration ratio of subframe quantities in a downlink subframe and an uplink subframe of the half-frame format of the LTE-TDD network is 3:1, and that a frame header of the half-frame format of the LTE-TDD network has a delay of 2 ms compared with a frame header of the frame format of the WiMAX network, and further configured to set a length of a downlink pilot time slot DWPTS of a special subframe in the half-frame format of the LTE-TDD network to be smaller than or equal to 9 symbols;
a second processing unit, configured to: if a configuration ratio of symbol quantities in a downlink subframe and an uplink subframe of the frame format of the WiMAX network is 32:15, determine that a configuration ratio of subframe quantities in a downlink subframe and an uplink subframe of the half-frame format of the LTE-TDD network is 3:1, and that a frame header of the half-frame format of the LTE-TDD network has a delay of 2 ms compared with a frame header of the frame format of the WiMAX network, and further configured to set a length of a DWPTS of a special subframe in the half-frame format of the LTE-TDD network to be smaller than or equal to 5 symbols;
a third processing unit, configured to: if a configuration ratio of symbol quantities in a downlink subframe and an uplink subframe of the frame format of the WiMAX network is 29:18, determine that a configuration ratio of subframe quantities in a downlink subframe and an uplink subframe of the half-frame format of the LTE-TDD network is 2:2, and that a frame header of the frame format of the LTE-TDD network has a 1 ms delay compared with a frame header of a half-frame format of the WiMAX network, and set a radio frequency channel ending position of a downlink subframe in the WiMAX network at the 27^{th} symbol of the downlink subframe; and
a fourth processing unit, configured to: if a configuration ratio of symbol quantities in a downlink subframe and an uplink subframe of the frame format of the WiMAX network is 29:18, determine that a configuration ratio of subframe quantities in a downlink subframe and an uplink subframe of the half-frame format of the LTE-TDD network is 2:2, and that a frame header of the half-frame format of the LTE-TDD network has a 1003.16 µs to 1020.31 µs delay compared with a frame header of the half-frame format of the WiMAX network, and set the symbol quantity of an uplink pilot time slot of a special subframe in the half-frame format of the LTE-TDD network to 0.

In an embodiment of the present invention, a communications system includes: a base station.

As can be seen from the preceding technical solutions, the embodiments of the present invention have the following advantages:

After an LTE-TDD network and a WiMAX network on a base station are synchronized with a same clock source, a frame format of the WiMAX network is determined, a half-frame format of the LTE-TDD network is determined according to the frame format of the WiMAX network, and a delay time between a frame header of the half-frame format of the LTE-TDD network and a frame header of the frame format of the WiMAX network is determined, so that the LTE-TDD network and the WiMAX network are synchronized, thereby effectively improving system performance.

### BRIEF DESCRIPTION OF DRAWINGS

FIG. 1 illustrates a frame format of a WiMAX network according to an embodiment of the present invention;
FIG. 2 illustrates a frame format of an LTE-TDD network according to an embodiment of the present invention;
FIG. 3 is a schematic diagram of a method for synchronizing an LTE-TDD network and a WiMAX network according to an embodiment of the present invention;
FIG. 4 is another schematic diagram of a method for synchronizing an LTE-TDD network and a WiMAX network according to an embodiment of the present invention;
FIG. 5-a is a diagram of a frame format of a WiMAX network and a diagram of a half-frame format of an LTE-TDD network according to an embodiment of the present invention;

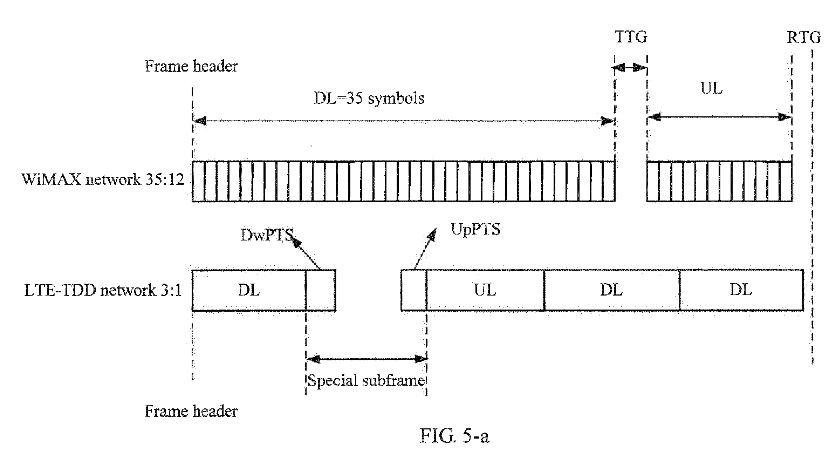

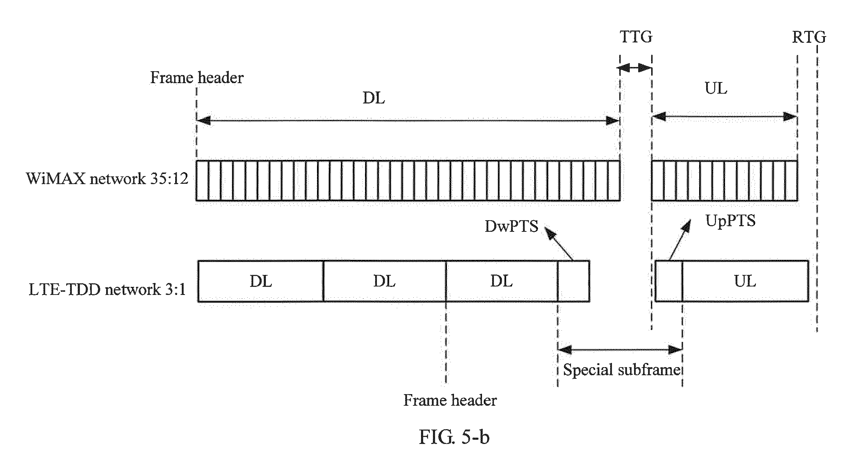

FIG. 5-b is a diagram of a frame format when a WiMAX network and an LTE-TDD network are synchronized according to an embodiment of the present invention;

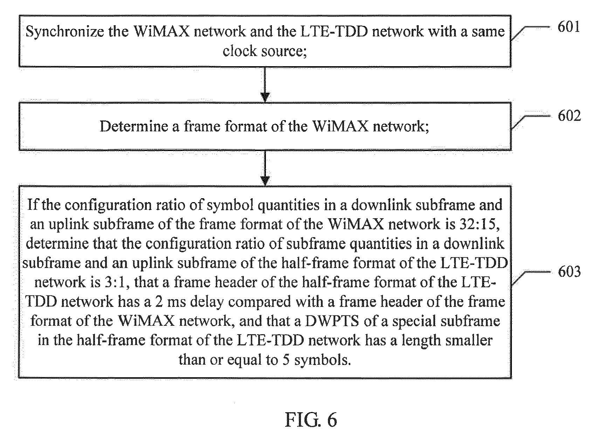

FIG. 6 is another schematic diagram of a method for synchronizing an LTE-TDD network and a WiMAX network according to an embodiment of the present invention;

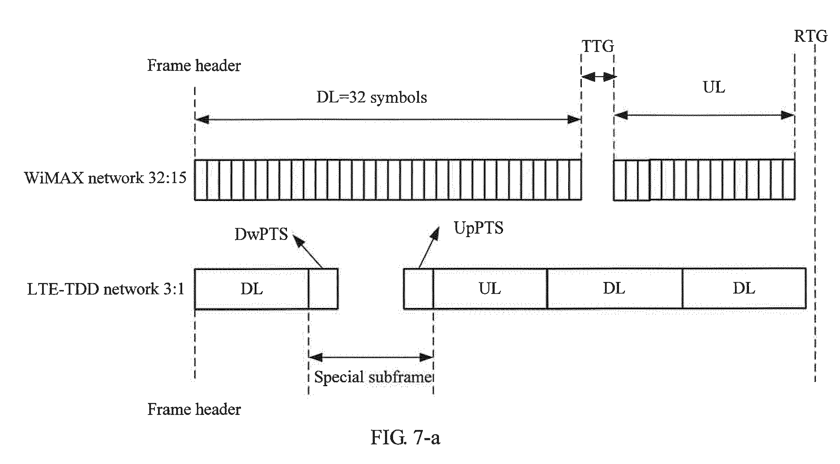

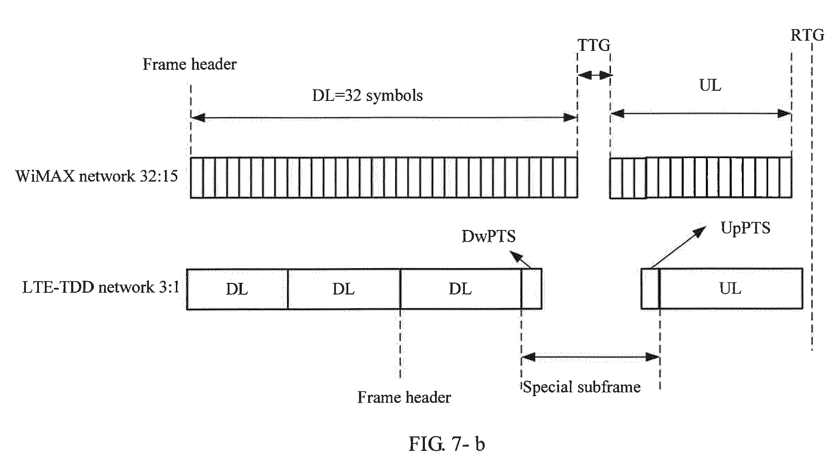

FIG. 7-a is a diagram of a frame format of a WiMAX network and a diagram of a half-frame format of an LTE-TDD network according to an embodiment of the present invention;
FIG. 7-b is a diagram of a frame format when a WiMAX network and an LTE-TDD network are synchronized according to an embodiment of the present invention;

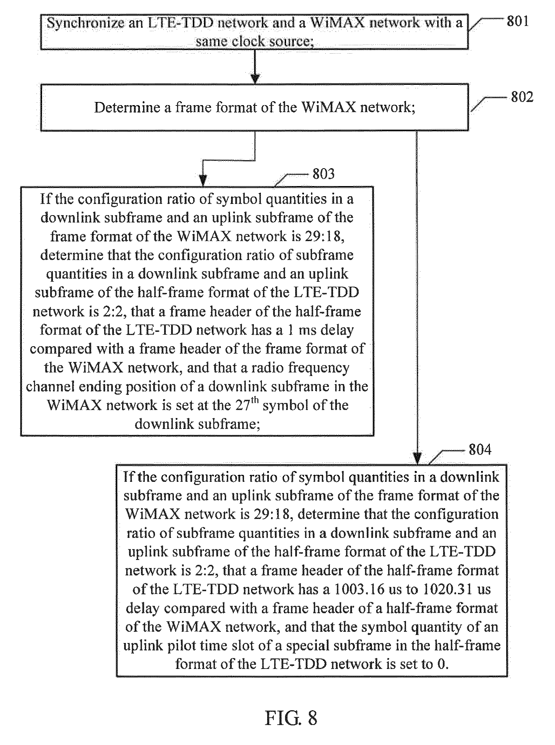

FIG. 8 is another schematic diagram of a method for synchronizing an LTE-TDD network and a WiMAX network according to an embodiment of the present invention;

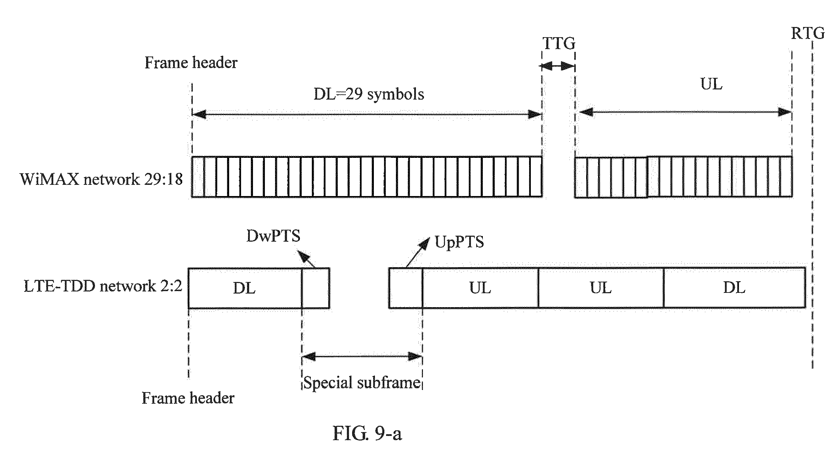

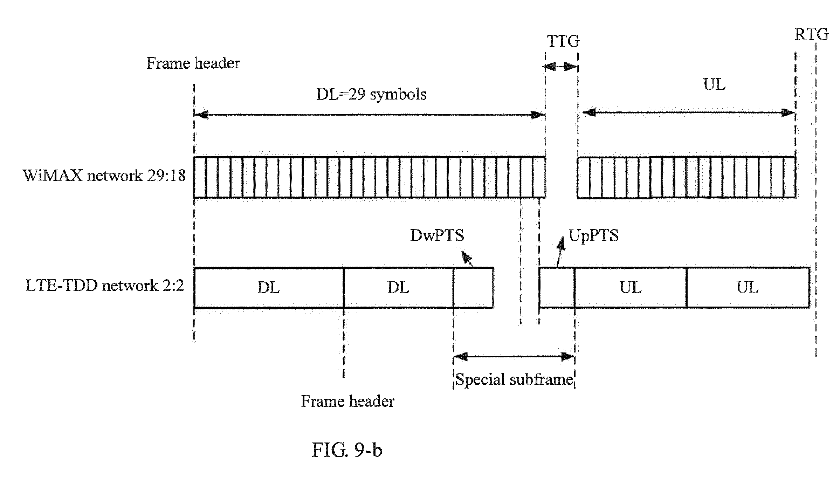

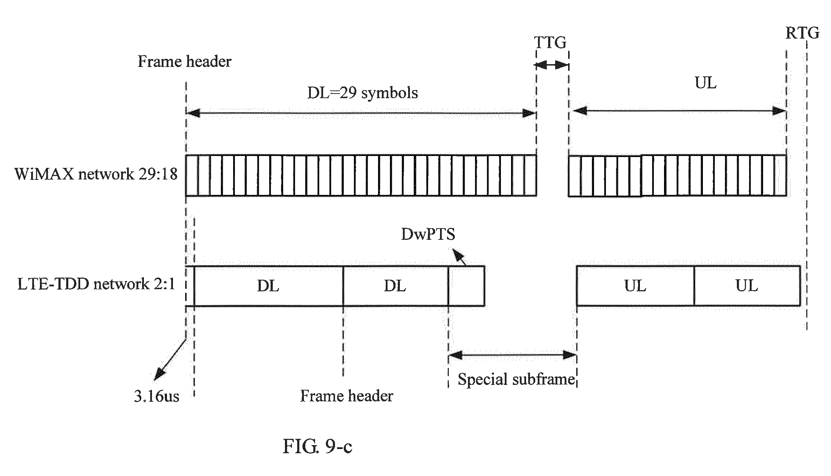

FIG. 9-a is a diagram of a frame format of a WiMAX network and a diagram of a half-frame format of an LTE-TDD network according to an embodiment of the present invention;
FIG. 9-b is a diagram of a frame format when a WiMAX network and an LTE-TDD network are synchronized according to an embodiment of the present invention;
FIG. 9-c is another diagram of a frame format when a WiMAX network and an LTE-TDD network are synchronized according to an embodiment of the present invention;

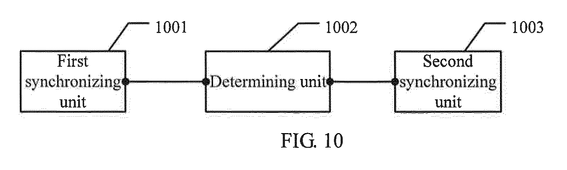

FIG. 10 is a schematic diagram of a base station according to an embodiment of the present invention; and

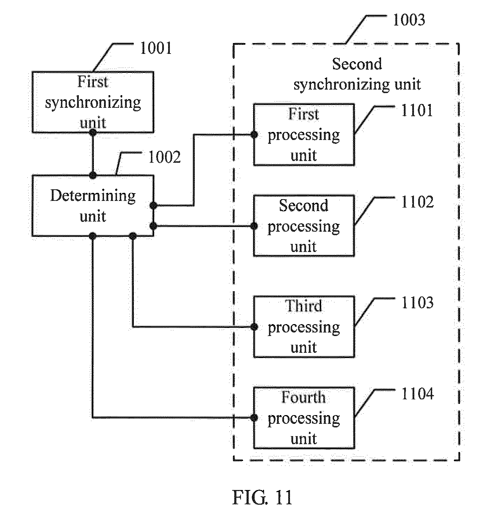

FIG. 11 is another schematic diagram of a base station according to an embodiment of the present invention.

### DESCRIPTION OF EMBODIMENTS

Embodiments of the present invention provide a method, a base station, and a system for synchronizing an LTE-TDD network and a WiMAX network, so as to achieve synchronization between the LTE-TDD network and the WiMAX network and improve system performance.

It should be noted that, the method for synchronizing an LTE-TDD network and a WiMAX network in the embodiments of the present invention is applicable to network synchronization on a dual-mode base station that supports both an LTE-TDD network and a WiMAX network, and is also applicable to network synchronization between one base station that supports an LTE-TDD network and another base station that supports a WiMAX network; the embodiments of the present invention take synchronization between an LTE-TDD network and a WiMAX network on a dual-mode base station as an example of description.

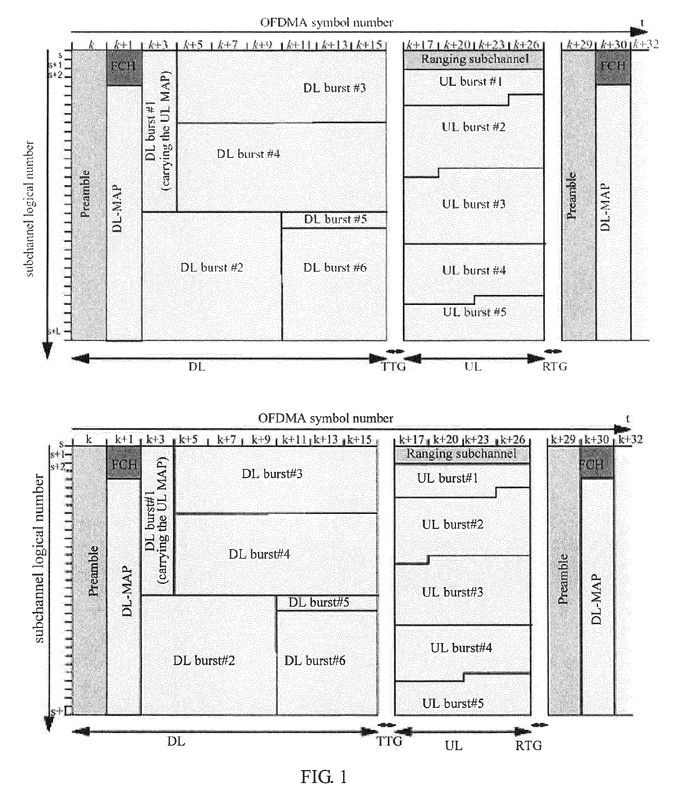

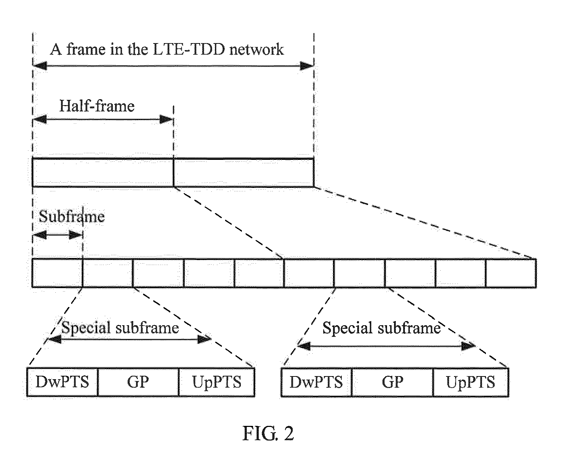

To better understand the technical solutions in the embodiments of the present invention, refer to FIG. 1 and FIG. 2, where FIG. 1 is a diagram of a frame format of a WiMAX network and FIG. 2 is a diagram of a frame format of an LTE-TDD network; it should be noted that FIG. 2 takes a frame format of an LTE-TDD network with a 5 ms switching period as an example for description.

Refer to FIG. 1, where a frame length of a WiMAX network is 5 ms, including a downlink (DL, Downlink) subframe and an uplink (UL, Uplink) subframe, a protection gap between a downlink subframe and an uplink subframe is called a transmit/receive transition gap (TTG), a protection gap between an uplink subframe and a downlink subframe of a next frame is called a receive/transmit transition gap (RTG), a TTG time is 105.7 µs, and an RTG time is 60 us. For a WiMAX network with a 5 M or 10 M bandwidth, a 5 ms frame may be divided into 48 symbols in a time domain, where a TTG and an RTG form a symbol, the other 47 symbols may be configured as an uplink subframe and a downlink subframe, which are used for transmitting data, and each of the 47 symbols has a length around 102.9 µs.

47 symbols of one frame in a WiMAX network are configured as a downlink subframe and an uplink subframe and the common configuration ratios of symbol quantities in the downlink subframe and the uplink subframe are 35:12, 32:15, and 29:18; therefore, a frame format of the WiMAX network is that a configuration ratio of symbol quantities in the downlink subframe and the uplink subframe is 35:12, 32:15, or 29:18.

Refer to FIG. 2, where a frame length of an LTE-TDD network is 10 ms, including two half-frames with a length of 5 ms; each half-frame includes five 1 ms subframes, among which four are ordinary subframes and one is a special subframe; an ordinary subframe includes two 0.5 ms time slots and the special subframe includes three special fields, namely a downlink pilot time slot (DwPTS), a protection gap (GP), and an uplink pilot time slot (UpPTS); the DwPTS field is used for transmitting downlink data, the GP field is used for performing transition from downlink to uplink, and the UpTPS field is used for implementing an uplink random access or transmitting a sounding (sounding) signal that provides an uplink measuring function.

It should be noted that, subframes of a frame in an LTE-TDD network may be configured, that is, positions of an uplink subframe, a downlink subframe, and a special subframe may be configured; refer to table 1 for feasible configuration solutions as follows:

**Table 1**

| **Configuration Plan No.** | **Downlink-to-Uplink Transition Point Switching Period** | **Sub-frame No. and Specific Configuration** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In table 1, D represents a downlink subframe, U represents an uplink subframe, S represents a special subframe, and each subframe has a 1 ms length; besides, the uplink-downlink transition point switching period of a frame in an LTE-TDD network may be 5 ms or 10 ms; when the switching period is 5 ms, the two half-frames of a frame that constitutes the LTE-TDD network are configured completely the same.

For the special subframe of a frame in an LTE-TDD network, time slot lengths of the DwPTS, GP, and UpPTS also have multiple feasible configuration plans; refer to table 2, as follows:

**Table 2**

| **Configuration Plan No.** | **Name and Corresponding Symbol Quantity** | | |
|---|---|---|---|
| | **DwPTS** | **GF** | **UpPTS** |
| 0 | 3 | 10 | 1 |
| 1 | 9 | 4 | 1 |
| 2 | 10 | 3 | 1 |
| 3 | 11 | 2 | 1 |
| 4 | 12 | 1 | 1 |
| 5 | 3 | 9 | 2 |
| 6 | 9 | 3 | 2 |
| 7 | 10 | 2 | 2 |
| 8 | 11 | 1 | 2 |

In table 2, a special subframe has a 1 ms length, including two time slots; each of the time slots includes 7 symbols and the 7 symbols in one time slot have lengths that are not completely the same, where the first symbol has a 71.88 µs length and each of the remaining 6 symbols has a length around 71.35 µs; in this embodiment of the present invention, 14 symbols of the special subframe may be allocated for DwPTS, GP, and UpPTS.

It should be noted that, in this embodiment of the present invention, to ensure that there is a protection gap for switching between half-frames, a partial length of the GP may be set at a position after where an uplink subframe of a half-frame ends and the partial length is 20.31 us, that is, in a half-frame, a special subframe between a downlink subframe and an uplink subframe has a 979.69 µs length.

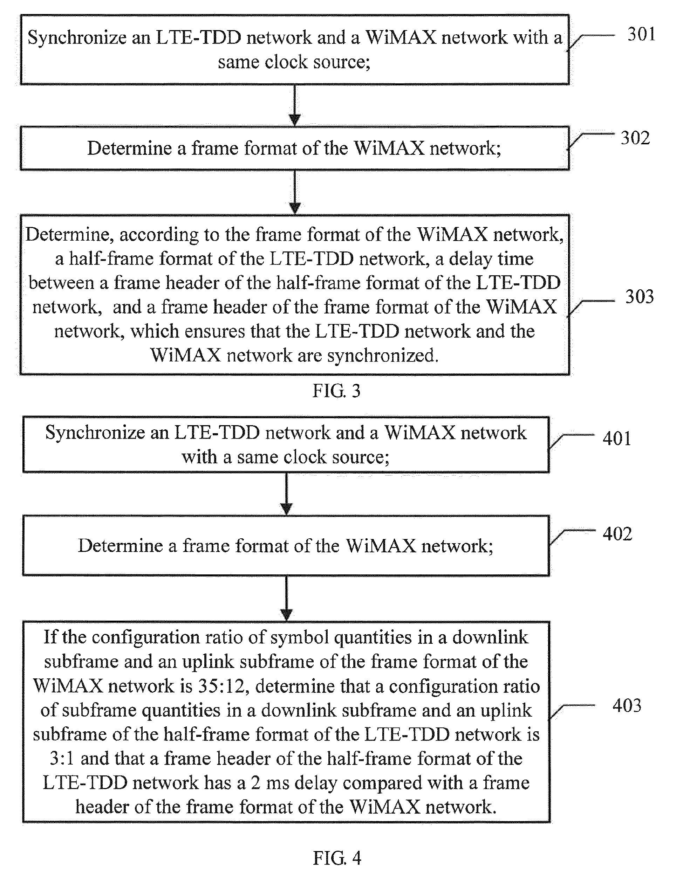

In the embodiments of the present invention, a half-frame format of an LTE-TDD network, as well as a delay time between a frame header of the half-frame format of the LTE-TDD network and a frame header of the WiMAX network, may be determined according to a frame format of a WiMAX network, thereby effectively avoiding interference between the WiMAX network and the LTE-TDD network and improving system performance; for a specific method that achieves synchronization between the LTE-TDD network and the WiMAX network, refer to FIG. 3, which is an embodiment of the method for synchronizing an LTE-TDD network and a WiMAX network according to an embodiment of the present invention, including:

Step 301: Synchronize an LTE-TDD network and a WiMAX network with a same clock source.

In this embodiment of the present invention, a base station synchronizes an LTE-TDD network and a WiMAX network with a same clock source, where the clock source may be a global positioning system (GPS, Global Positioning System) clock source, or a 1588 clock source, or a remote global positioning system (RGPS, Remote Global Positioning System) clock source.

Step 302: Determine a frame format of the WiMAX network.

In this embodiment of the present invention, the base station determines a frame format of the WiMAX network, where the frame format of the WiMAX network may be that a configuration ratio of symbol quantities in a downlink subframe and an uplink subframe is 35:12, 32:15, or 29:18.

Step 303: Determine a half-frame format of the LTE-TDD network according to the frame format of the WiMAX network, and determine a delay time between a frame header of the half-frame format of the LTE-TDD network and a frame header of the frame format of the WiMAX network, so that the LTE-TDD network and the WiMAX network are synchronized.

In this embodiment of the present invention, the base station determines a half-frame format of the LTE-TDD network according to the frame format of the WiMAX network, and determines a delay time between a frame header of the half-frame format of the LTE-TDD network and a frame header of the frame format of the WiMAX network, so that the LTE-TDD network and the WiMAX network are synchronized, thereby effectively avoiding interference between the two networks, and improving system performance.

In this embodiment of the present invention, the frame format of the WiMAX network is that a ratio of symbol quantities in a downlink subframe and an uplink subframe may be any one of 35:12, 32:15, or 29:18, and the following will describe a method for determining a half-frame format of the LTE-TDD network according to the frame format of the WiMAX network; refer to FIG. 4, which, in this embodiment of the present invention, provides an embodiment of the method for synchronizing a WiMAX network and an LTE-TDD network when the frame format of the WiMAX network is that a ratio of symbol quantities in a downlink subframe and an uplink subframe is 35:12, including:

Step 401: Synchronize an LTE-TDD network and a WiMAX network with a same clock source.

In this embodiment of the present invention, a base station synchronizes an LTE-TDD network and a WiMAX network with a same clock source, where the clock source may be a global positioning system (GPS, Global Positioning System) clock source, or a 1588 clock source, or a remote global positioning system (RGPS, Remote Global Positioning System) clock source.

Step 402: Determine a frame format of the WiMAX network.

In this embodiment of the present invention, the base station determines a frame format of the WiMAX network, where the frame format of the WiMAX network may be that a configuration ratio of symbol quantities in a downlink subframe and an uplink subframe is 35:12, 32:15, or 29:18.

Step 403: If the configuration ratio of symbol quantities in a downlink subframe and an uplink subframe of the frame format of the WiMAX network is 35:12, determine that a configuration ratio of subframe quantities in a downlink subframe and an uplink subframe of the half-frame format of the LTE-TDD network is 3:1 and that a frame header of the half-frame format of the LTE-TDD network has a delay of 2 ms compared with a frame header of the frame format of the WiMAX network.

In this embodiment of the present invention, if the configuration ratio of symbol quantities in a downlink subframe and an uplink subframe of the frame format of the WiMAX network is 35:12, to ensure that the WiMAX network can be synchronized with an LTE-TDD network, it may be determined that the configuration ratio of subframe quantities in a downlink subframe and an uplink subframe of the half-frame format of the LTE-TDD network is 3:1 and that a frame header of the half-frame format of the LTE-TDD network has a delay of 2 ms compared with a frame header of the frame format of the WiMAX network.

The following is specific analysis:

In the WiMAX network, a frame length is 5 ms and a switching period is 5 ms; to ensure that the WiMAX network can be synchronized with the LTE-TDD network, the switching period of a frame in the LTE-TDD network should be 5 ms; besides, when the configuration ratio of symbol quantities in a downlink subframe and an uplink subframe of the frame format of the WiMAX network is 35:12, a downlink subframe has a 3600 µs length, an uplink subframe has a 1234.3 µs length, a TGG time is 105.7 µs, and an RTG length is 60 µs; therefore, in the half-frame format of the LTE-TDD network, a downlink subframe must have a length larger than 3 ms, and it may be determined that the configuration ratio of subframe quantities in a downlink subframe and an uplink subframe of the half-frame format of the LTE-TDD network is 3:1, that is, the configuration plan No.2 in table 1 is selected. After the configuration plan No.2 is selected, the WiMAX network and the LTE-TDD network cannot be completely synchronized; refer to FIG. 5-a, which is a diagram of the frame format of the WiMAX network and a diagram of the half-frame format of the LTE-TDD network; it can be seen from FIG. 5-a that, the WiMAX network and the LTE-TDD network still have interference. Therefore, a configuration manner of a special subframe of the half-frame format of the LTE-TDD network and a delay time between a frame header of the half-frame format of the LTE-TDD network and a frame header of the frame format of the WiMAX network also need to be determined so that synchronization between the WiMAX network and the LTE-TDD network can be achieved.

According to the structural diagram shown in FIG. 5-a, to ensure that the WiMAX network and the LTE-TDD network can be synchronized, a frame header of the half-frame format of the LTE-TDD network should be delayed 2 ms compared with a frame header of the frame format of the WiMAX network; meanwhile, because a downlink subframe plus a TTG time in the WiMAX network has a 3705.7 µs length, to avoid interference between the WiMAX network and the DwPTS and UpPTS of a special subframe, the special subframe of the half-frame format of the LTE-TDD network also needs to be configured, that is, after a 2 ms delay, the first subframe that contains the frame header of the half-frame format of the LTE-TDD network, as well as the DwPTS in the special subframe, should be no longer than 1705.7 µs, and the DwPTS should be no longer than 705.7 µs, so as to ensure that no interference occurs.

In this embodiment of the present invention, because the special subframe has a 1 ms length, including two time slots, each of the time slots includes 7 symbols and the 7 symbols in one time slot have lengths that are not completely the same, where the first symbol has a 71.88 µs length and each of the remaining 6 symbols has a length around 71.35 µs, to ensure that the WiMAX network and the LTE-TDD network are synchronized, the symbol quantity of the DwPTS should be smaller than or equal to 9; referring to table 2, where the configuration plan of the special subframe may be any one of configuration plans numbered 0, 1, 5, and 6; for details, refer to FIG. 5-b, which, in this embodiment of the present invention, is a diagram of a frame format when the WiMAX network and the LTE-TDD network are synchronized after step 403 is performed.

In this embodiment of the present invention, if the configuration ratio of symbol quantities in a downlink subframe and an uplink subframe of the frame format of the WiMAX network is 35:12, it may be determined that the configuration ratio of subframe quantities in a downlink subframe and an uplink subframe of the half-frame format of the LTE-TDD network is 3:1, that a frame header of the half-frame format of the LTE-TDD network has a delay of 2 ms compared with a frame header of the frame format of the WiMAX network, and that a DWPTS of a special subframe in the half-frame format of the LTE-TDD network has a length smaller than or equal to 9 symbols, thereby effectively ensuring that the WiMAX network and the LTE-TDD network are synchronized and avoiding interference.

Refer to FIG. 6, which, in this embodiment of the present invention, is an embodiment of a method for synchronizing a WiMAX network and an LTE-TDD network when a frame format of the WiMAX network is that the ratio of symbol quantities in a downlink subframe and an uplink subframe is 32:15, including:

Step 601: Synchronize an LTE-TDD network and a WiMAX network with a same clock source;

In this embodiment of the present invention, a base station synchronizes an LTE-TDD network and a WiMAX network with a same clock source, where the clock source may be a global positioning system (GPS, Global Positioning System) clock source, or a 1588 clock source, or a remote global positioning system (RGPS, Remote Global Positioning System) clock source.

Step 602: Determine a frame format of the WiMAX network;

In this embodiment of the present invention, the base station determines a frame format of the WiMAX network, where the frame format of the WiMAX network may be that a configuration ratio of symbol quantities in a downlink subframe and an uplink subframe is 35:12, 32:15, or 29:18.

Step 603: If the configuration ratio of symbol quantities in a downlink subframe and an uplink subframe of the frame format of the WiMAX network is 32:15, determine that a configuration ratio of subframe quantities in a downlink subframe and an uplink subframe of the half-frame format of the LTE-TDD network is 3:1, that a frame header of the half-frame format of the LTE-TDD network has a delay of 2 ms compared with a frame header of the frame format of the WiMAX network, and that a DWPTS of a special subframe in the half-frame format of the LTE-TDD network has a length smaller than or equal to 5 symbols.

In this embodiment of the present invention, if the configuration ratio of symbol quantities in a downlink subframe and an uplink subframe of the frame format of the WiMAX network is 32:15, to ensure that the WiMAX network can be synchronized with the LTE-TDD network, it may be determined that the configuration ratio of subframe quantities in a downlink subframe and an uplink subframe of the half-frame format of the LTE-TDD network is 3:1, that a frame header of the half-frame format of the LTE-TDD network has a delay of 2 ms compared with a frame header of the frame format of the WiMAX network, and that a DwPTS of a special subframe in the half-frame format of the LTE-TDD network has a length smaller than or equal to 5 symbols.

The following is specific analysis:

In this embodiment of the present invention, when the configuration ratio of symbol quantities in a downlink subframe and an uplink subframe of the frame format of the WiMAX network is 32:15, the last symbol of the downlink subframe does not have transmit power; in this case, the downlink subframe that really has transmit power has a 3188.6 µs length, the uplink subframe has a 1542.9 µs length, an RTG time is 60 µs, and a TTG time is 208.6 µs; it should be noted that the TGG time is originally 105.7 µs, but because there is one symbol that has no transmit power, the TGG time is 208.6 µs.

To ensure that the LTE-TDD network can be synchronized with the WiMAX network, it may be determined that the configuration ratio of subframe quantities in a downlink subframe and an uplink subframe of the half-frame format of the LTE-TDD network is 3:1; refer to FIG. 7-a, which is a diagram of the frame format of the WiMAX network and a diagram of the half-frame format of the LTE-TDD network, it can be seen from FIG. 7-a that, the WiMAX network and the LTE-TDD network still have interference; therefore, a configuration manner of a special subframe of the half-frame format of the LTE-TDD network and a delay time between a frame header of the half-frame format of the LTE-TDD network and a frame header of the frame format of the WiMAX network also need to be determined so that synchronization between the WiMAX network and the LTE-TDD network can be achieved.

According to the structural diagram shown in FIG. 7-a, to ensure that the WiMAX network and the LTE-TDD network can be synchronized, a frame header of the half-frame format of the LTE-TDD network should be delayed by 2 ms compared with a frame header of the frame format of the WiMAX network; meanwhile, because a downlink subframe plus a TTG time in the WiMAX network has a 3397.2 µs length, to avoid interference between the WiMAX network and the DwPTS and UpPTS of a special subframe, the special subframe of the half-frame format of the LTE-TDD network also needs to be configured, that is, after a 2 ms delay, the first subframe that contains the frame header of the half-frame format of the LTE-TDD network, as well as the DwPTS in the special subframe, should be no longer than 1397.2 µs, and the DwPTS should be no longer than 397.2 µs, so as to ensure that no interference occurs.

In this embodiment of the present invention, because the special subframe has a 1 ms length, including two time slots, each of the time slots includes 7 symbols and the 7 symbols in one time slot have lengths that are not completely the same, where the first symbol has a 71.88 µs length and each of the remaining 6 symbols has a length around 71.35 µs, to ensure that the WiMAX network and the LTE network are synchronized, the symbol quantity of the DwPTS should be smaller than or equal to 5; referring to table 2, where the configuration plan of the special subframe may be the configuration plans numbered 0 or 5; for details, refer to FIG. 7-b, which, in this embodiment of the present invention, is a diagram of a frame format when the WiMAX network and the LTE-TDD network are synchronized after step 603 is performed.

Refer to FIG. 8, which, in this embodiment of the present invention, is an embodiment of a method for synchronizing a WiMAX network and an LTE-TDD network when the frame format of the WiMAX network is that the configuration ratio of symbol quantities in a downlink subframe and an uplink subframe is 29:18, including:

Step 801: Synchronize an LTE-TDD network and a WiMAX network with a same clock source;

In this embodiment of the present invention, a base station synchronizes an LTE-TDD network and a WiMAX network with a same clock source, where the clock source may be a global positioning system (GPS, Global Positioning System) clock source, or a 1588 clock source, or a remote global positioning system (RGPS, Remote Global Positioning System) clock source.

Step 802: Determine a frame format of the WiMAX network;

In this embodiment of the present invention, the base station determines a frame format of the WiMAX network, where the frame format of the WiMAX network may be that a configuration ratio of symbol quantities in a downlink subframe and an uplink subframe is 35:12, 32:15, or 29:18.

Step 803: If the configuration ratio of symbol quantities in a downlink subframe and an uplink subframe of the frame format of the WiMAX network is 29:18, determine that a configuration ratio of subframe quantities in a downlink subframe and an uplink subframe of the half-frame format of the LTE-TDD network is 2:2, and that a frame header of a frame format of the LTE-TDD network has a 1 ms delay compared with a frame header of a half-frame format of the WiMAX network, and set a radio frequency channel ending position of a downlink subframe in the WiMAX network at the 27^{th} symbol of the downlink subframe;

In this embodiment of the present invention, if the configuration ratio of symbol quantities in a downlink subframe and an uplink subframe of the frame format of the WiMAX network is 29:18, to ensure that the WiMAX network is synchronized with the LTE-TDD network, it may be determined that the configuration ratio of subframe quantities in a downlink subframe and an uplink subframe of the half-frame format of the LTE-TDD network is 2:2, and that a frame header of the frame format of the LTE-TDD network has a 1 ms delay compared with a frame header of the half-frame format of the WiMAX network, and a radio frequency channel ending position of a downlink subframe in the WiMAX network may be set at the 27^{th} symbol of the downlink subframe.

The following is specific analysis:

In this embodiment of the present invention, when the configuration ratio of symbol quantities in a downlink subframe and an uplink subframe of the frame format of the WiMAX network is 18:29, the downlink subframe has a 2982.6 µs length, the uplink subframe has a 1851.44 µs length, a TGG time is 105.7 µs, and an RTG time is 60 µs; to ensure that the WiMAX network and the LTE-TDD network can be synchronized, the configuration ratio of subframe quantities in a downlink subframe and an uplink subframe of the half-frame format of the LTE-TDD network should be 2:2, that is, the configuration plan No.1 in table 1 should be selected; however, after the configuration plan No.1 is selected, the WiMAX network and the LTE-TDD network cannot be completely synchronized; refer to FIG. 9-a, which is a diagram of the frame format of the WiMAX network and a diagram of the half-frame format of the LTE-TDD network; it can be seen from FIG. 9-a that, the WiMAX network and the LTE-TDD network still have interference. Therefore, further adjustment and configuration are required.

It can be seen from FIG. 9-a, to ensure that the WiMAX network and the LTE-TDD network are synchronized, a frame header of the half-frame format of the LTE-TDD network should have a 1 ms delay compared with a frame header of the frame format of the WiMAX network.

In this embodiment of the present invention, the downlink subframe of the frame format of the WiMAX network includes 29 symbols and has a 2982.86 µs length; every two of the symbols compose a time slot and a time slot is a minimum unit in resource allocation; however, because the special subframe, no matter how it is configured, will have interference with the WiMAX network after the half-frame format of the LTE-TDD network is delayed 1 ms; to avoid the interference, a radio frequency channel ending position of the downlink subframe in the WiMAX network can be set at the 27^{th} symbol of the downlink subframe, so as to achieve synchronization between the WiMAX network and the LTE network.

In this embodiment of the present invention, because a radio frequency channel ending position of the downlink subframe in the WiMAX network is set at the 27^{th} symbol of the downlink subframe, the downlink subframe actually includes 27 symbols and has a 2777.14 µs length; a maximum UpPTS of the LTE network is 2 symbols, and in a situation where the half-frame format of the LTE-TDD network is delayed 1 ms, the special subframe, no matter how it is configured, can support synchronization between the WiMAX network and the LTE network. For details, refer to FIG. 9-b, which, in this embodiment of the present invention, is the diagram of the frame format when the WiMAX network and the LTE network are synchronized after step 803 is performed.

Step 804: If the configuration ratio of symbol quantities in a downlink subframe and an uplink subframe of the frame format of the WiMAX network is 29:18, determine that a configuration ratio of subframe quantities in a downlink subframe and an uplink subframe of the half-frame format of the LTE-TDD network is 2:2, and that a frame header of the half-frame format of the LTE-TDD network has a 1003.16 µs to 1020.31 µs delay compared with a frame header of the half-frame format of the WiMAX network, and set the symbol quantity of an uplink pilot time slot of a special subframe in the half-frame format of the LTE-TDD network to 0.

In this embodiment of the present invention, when the configuration ratio of symbol quantities in a downlink subframe and an uplink subframe of the frame format of the WiMAX network is 29:18, to achieve synchronization between the LTE network and the WiMAX network, it may be determined that the configuration ratio of subframe quantities in a downlink subframe and an uplink subframe of the half-frame format of the LTE-TDD network is 2:2, and that a frame header of the half-frame format of the LTE-TDD network has a 1003.16 µs to 1020.31 µs delay compared with a frame header of the half-frame format of the WiMAX network, and the symbol quantity of an uplink pilot time slot of a special subframe in the half-frame format of the LTE-TDD network may be set to 0.

The following is specific analysis:

In this embodiment of the present invention, when the configuration ratio of symbol quantities in a downlink subframe and an uplink subframe of the frame format of the WiMAX network is 18:29, the downlink subframe has a 2982.6 µs length, the uplink subframe has a 1851.44 µs length, a TGG time is 105.7 µs, and an RTG time is 60 µs; to ensure that the WiMAX network and the LTE-TDD network can be synchronized, the configuration ratio of subframe quantities in a downlink subframe and an uplink subframe of the half-frame format of the LTE-TDD network should be 2:2, that is, the configuration plan No.1 in table 1 should be selected; however, after the configuration plan No.1 is selected, the WiMAX network and the LTE-TDD network cannot be completely synchronized; refer to FIG. 9-a, which is a diagram of the frame format of the WiMAX network and a diagram of the half-frame format of the LTE-TDD network; it can be seen from FIG. 9-a that, the WiMAX network and the LTE-TDD network still have interference. Therefore, further adjustment and configuration of the LTE-TDD half-frame format are required.

In this embodiment of the present invention, in a situation where a frame header of a half-frame format of the LTE-TDD network has a 1 ms delay compared with a frame header of a frame format of the WiMAX network, a 3.16 µs interval in an LTE-TDD uplink subframe is still affected by a downlink subframe of the WiMAX network; further because there is a 20.31 µs time used for switching uplink and downlink receive/transmit channels in the LTE-TDD network between an uplink subframe of a half-frame format and a downlink subframe of a next half-frame format in the LTE-TDD network, the frame header of the half-frame format in the LTE-TDD network may be further delayed 3.16 µs to 20.31 µs based on the 1 ms delay, that is, the frame header of the half-frame format of the LTE-TDD network has a 1003.16 µs to 1020.31 µs delay compared with the frame header of the WiMAX network. Meanwhile, to prevent an LTE-TDD radio frequency from being interfered by a downlink signal of the WiMAX network when a receive channel is opened, a symbol quantity of an uplink pilot time slot in a special subframe of a half-frame format of the LTE-TDD network may be set to 0, so as to achieve synchronization between the LTE-TDD network and the WiMAX network; it should be noted that, if a symbol quantity of an uplink pilot time slot in a special subframe of a half-frame format of the LTE-TDD network is set to 0, the opening time of a radio frequency receive channel in the LTE-TDD network needs to be changed from a starting position of the UpPTS to a starting position of an uplink subframe.

In this embodiment of the present invention, the UpPTS field of the special subframe in the half-frame format of the LTE-TDD network has two major functions: one function is to carry a preamble (Preamble) of format (format) 4, mainly used for transmitting a short Preamble to finish a random access process when a cell radius is small; the other function is to carry sounding reference information, used for functions such as measurement, channel estimation and frame synchronization timing of an uplink signal; however, neither of these two functions of the UpPTS field is necessary, because a short preamble is used only when a cell radius is small and some uplink resources may be saved, but a normal Preamble is used in a more popular scenario, where the normal Preamble can perform a function of a short Preamble but does not need to be transmitted in the UpPTS field; besides, a sounding reference signal is not only transmitted in the UpPTS field, but also transmitted in a last symbol in an ordinary uplink subframe, so the sounding reference signal may be set in a non-UpPTS symbol through processing of a base station. Therefore, the UpPTS field is not necessary and may be removed; removing the UpPTS field does not affect a random access or execution of an uplink task in the LTE-TDD network, that is, the symbol quantity of an uplink pilot time slot of the special subframe in the half-frame format of the LTE-TDD network may be set to 0. For details, refer to FIG. 9-c, which, in this embodiment of the present invention, is the diagram of the frame format when the LTE-TDD network and the WiMAX network are synchronized after step 804 is performed; it should be noted that, in FIG. 9-c, it is taken as an example that a frame header of the half-frame format of the LTE-TDD frame has a 1003.16 µs delay compared with a frame header of the WiMAX network.

In this embodiment of the present invention, a base station determines, according to a frame format of the WiMAX network, a half-frame format of the LTE network and a delay time between a frame header of the half-frame format of the LTE-TDD network and a frame header of the frame format of the WiMAX network, thereby effectively achieving synchronization between the LTE-TDD network and the WiMAX network.

Refer to FIG. 10, which is an embodiment of a base station according to an embodiment of the present invention, including:
a first synchronizing unit 1001, configured to synchronize an LTE-TDD network and a WiMAX network with a same clock source;
a determining unit 1002, configured to determine a frame format of the WiMAX network; and
a second synchronizing unit 1003, configured to determine a half-frame format of the LTE-TDD network according to the frame format of the WiMAX network, and determine a delay time between a frame header of the half-frame format of the LTE-TDD network and a frame header of the frame format of the WiMAX network, so that the half-frame of the LTE-TDD network and the frame of the WiMAX network are synchronized.

In this embodiment of the present invention, the first synchronizing unit 1001 synchronizes an LTE-TDD network and a WiMAX network with a same clock source; then the determining unit 1002 determines a frame format of the WiMAX network; the second synchronizing unit 1003 determines a half-frame format of the LTE-TDD network according to the frame format of the WiMAX network, and determines a delay time between a frame header of the half-frame format of the LTE-TDD network and a frame header of the frame format of the WiMAX network, so that the half-frame of the LTE-TDD network and the frame of the WiMAX network are synchronized.

To better understand an apparatus according to an embodiment of the present invention, refer to FIG. 11, which is an embodiment of a base station according to an embodiment of the present invention, including:
a first synchronizing unit 1001, a determining unit 1002, and a second synchronizing unit 1003 in the embodiment shown in FIG. 10, which are the same as the description of the embodiment shown in FIG. 10, so no more details are provided here.

The second synchronizing unit 1003 further includes:
a first processing unit 1101, configured to: if a configuration ratio of symbol quantities in a downlink subframe and an uplink subframe of a frame format of the WiMAX network is 35:12, determine that a configuration ratio of subframe quantities in a downlink subframe and an uplink subframe of a half-frame format of the LTE-TDD network is 3:1, and that a frame header of the half-frame format of the LTE-TDD network has a delay of 2 ms compared with a frame header of the frame format of the WiMAX network, and further configured to set a length of a downlink pilot time slot DWPTS of a special subframe in the half-frame format of the LTE-TDD network to be smaller than or equal to 9 symbols;
a second processing unit 1102, configured to: if a configuration ratio of symbol quantities in a downlink subframe and an uplink subframe of a frame format of the WiMAX network is 32:15, determine that a configuration ratio of subframe quantities in a downlink subframe and an uplink subframe of a half-frame format of the LTE-TDD network is 3:1, and that a frame header of the half-frame format of the LTE-TDD network has a delay of 2 ms compared with a frame header of the frame format of the WiMAX network, and further configured to determine a length of a DWPTS of a special subframe in the half-frame format of the LTE-TDD network to be smaller than or equal to 5 symbols;
a third processing unit 1103, configured to: if a configuration ratio of symbol quantities in a downlink subframe and an uplink subframe of a frame format of the WiMAX network is 29:18, determine that a configuration ratio of subframe quantities in a downlink subframe and an uplink subframe of a half-frame format of the LTE-TDD network is 2:2, and that a frame header of a frame format of the LTE-TDD network has a 1 ms delay compared with a frame header of a half-frame format of the WiMAX network, and set a radio frequency channel ending position of a downlink subframe in the WiMAX network at the 27^{th} symbol of the downlink subframe; and
a fourth processing unit 1104, configured to: if a configuration ratio of symbol quantities in a downlink subframe and an uplink subframe of a frame format of the WiMAX network is 29:18, determine that a configuration ratio of subframe quantities in a downlink subframe and an uplink subframe of a half-frame format of the LTE-TDD network is 2:2, and that a frame header of the half-frame format of the LTE-TDD network has a 1003.16 µs to 1020.31 µs delay compared with a frame header of the half-frame format of the WiMAX network, and set the symbol quantity of an uplink pilot time slot of a special subframe in the half-frame format of the LTE-TDD network to 0.

In this embodiment of the present invention, the first synchronizing unit 1001 synchronizes an LTE-TDD network and a WiMAX network with a same clock source, and then the determining unit 1002 determines a frame format of the WiMAX network; if a configuration ratio of symbol quantities in a downlink subframe and an uplink subframe of a frame format of the WiMAX network is 35:12, the first processing unit 1101 of the second synchronizing unit 1003 determines that a configuration ratio of subframe quantities in a downlink subframe and an uplink subframe of a half-frame format of the LTE-TDD network is 3:1, and that a frame header of the half-frame format of the LTE-TDD network has a delay of 2 ms compared with a frame header of the frame format of the WiMAX network, and is further configured to set a length of a downlink pilot time slot DWPTS of a special subframe in the half-frame format of the LTE-TDD network to be smaller than or equal to 9 symbols; if a configuration ratio of symbol quantities in a downlink subframe and an uplink subframe of a frame format of the WiMAX network is 32:15, the second processing unit 1102 of the second synchronizing unit 1003 determines that a configuration ratio of subframe quantities in a downlink subframe and an uplink subframe of a half-frame format of the LTE-TDD network is 3:1, and that a frame header of the half-frame format of the LTE-TDD network has a delay of 2 ms compared with a frame header of the frame format of the WiMAX network, and is further configured to determine a length of a DWPTS of a special subframe in the half-frame format of the LTE-TDD network to be smaller than or equal to 5 symbols; if a configuration ratio of symbol quantities in a downlink subframe and an uplink subframe of a frame format of the WiMAX network is 29:18, the third processing unit 1103 of the second synchronizing unit 1003 determines that a configuration ratio of subframe quantities in a downlink subframe and an uplink subframe of a half-frame format of the LTE-TDD network is 2:2, and that a frame header of a frame format of the LTE-TDD network has a 1 ms delay compared with a frame header of a half-frame format of the WiMAX network, and sets a radio frequency channel ending position of a downlink subframe in the WiMAX network at the 27^{th} symbol of the downlink subframe; if a configuration ratio of symbol quantities in a downlink subframe and an uplink subframe of a frame format of the WiMAX network is 29:18, the fourth processing unit 1104 of the second synchronizing unit 1003 determines that a configuration ratio of subframe quantities in a downlink subframe and an uplink subframe of a half-frame format of the LTE-TDD network is 2:2, and that a frame header of the half-frame format of the LTE-TDD network has a 1003.16 µs to 1020.31 µs delay compared with a frame header of the half-frame format of the WiMAX network, and sets the symbol quantity of an uplink pilot time slot of a special subframe in the half-frame format of the LTE-TDD network to 0. After the synchronization processing of the second synchronizing unit 1003, synchronization between the LTE-TDD network and the WiMAX network can be effectively achieved.

It should be noted that an embodiment of the present invention also relates to a communications system which includes the base station shown in FIG. 10 or FIG. 11.

A person of ordinary skill in the art may understand that all or a part of the steps of the method in the embodiments may be implemented by a program instructing relevant hardware. The program may be stored in a computer readable storage medium. The storage medium may be a read-only memory, a magnetic disk, or an optical disk or the like.

A method, a base station, and a system for synchronizing an LTE-TDD network and a WiMAX network provided by the present invention are described above in detail. A person of ordinary skill in the art may make modifications to the specific implementation manners and application scopes according to the idea of the present invention. In conclusion, the content of the specification shall not be construed as a limitation to the present invention.

## Claims

1. A method for synchronizing a long-term evolution time division duplexing LTE-TDD network and a worldwide interoperability for microwave access WiMAX network, comprising:
synchronizing an LTE-TDD network and a WiMAX network with a same clock source;
determining a frame format of the WiMAX network; and
determining, according to the frame format of the WiMAX network, a half-frame format of the LTE-TDD network, a delay time between a frame header of the half-frame format of the LTE-TDD network, and a frame header of the frame format of the WiMAX network, so that the LTE-TDD network and the WiMAX network are synchronized.

2. The method according to claim 1, wherein the determining, according to the frame format of the WiMAX network, a half-frame format of the LTE-TDD network, a delay time between a frame header of the half-frame format of the LTE-TDD network, and a frame header of the frame format of the WiMAX network, comprises:
if a configuration ratio of symbol quantities in a downlink subframe and an uplink subframe of the frame format of the WiMAX network is 35:12, determining that a configuration ratio of subframe quantities in a downlink subframe and an uplink subframe of the half-frame format of the LTE-TDD network is 3:1, that a frame header of the half-frame format of the LTE-TDD network has a delay of 2 ms compared with a frame header of the frame format of the WiMAX network, and that a downlink pilot time slot DWPTS of a special subframe in the half-frame format of the LTE-TDD network has a length smaller than or equal to 9 symbols.

3. The method according to claim 1, wherein the determining, according to the frame format of the WiMAX network, a half-frame format of the LTE-TDD network, a delay time between a frame header of the half-frame format of the LTE-TDD network, and a frame header of the frame format of the WiMAX network, comprises:
if a configuration ratio of symbol quantities in a downlink subframe and an uplink subframe of the frame format of the WiMAX network is 32:15, determining that a configuration ratio of subframe quantities in a downlink subframe and an uplink subframe of the half-frame format of the LTE-TDD network is 3:1, that a frame header of the half-frame format of the LTE-TDD network has a delay of 2 ms compared with a frame header of the frame format of the WiMAX network, and that a DWPTS of a special subframe in the half-frame format of the LTE-TDD network has a length smaller than or equal to 5 symbols.

4. The method according to claim 1, wherein the determining, according to the frame format of the WiMAX network, a half-frame format of the LTE-TDD network, a delay time between a frame header of the half-frame format of the LTE-TDD network, and a frame header of the frame format of the WiMAX network comprises:
if a configuration ratio of symbol quantities in a downlink subframe and an uplink subframe of the frame format of the WiMAX network is 29:18, determining that a configuration ratio of subframe quantities in a downlink subframe and an uplink subframe of the half-frame format of the LTE-TDD network is 2:2, and that a frame header of the frame format of the LTE-TDD network has a 1 ms delay compared with a frame header of a half-frame format of the WiMAX network, and setting a radio frequency channel ending position of a downlink subframe in the WiMAX network at the 27^{th} symbol of the downlink subframe.

5. The method according to claim 1, wherein the determining, according to the frame format of the WiMAX network, a half-frame format of the LTE-TDD network, a delay time between a frame header of the half-frame format of the LTE-TDD network, and a frame header of the frame format of the WiMAX network comprises:
if a configuration ratio of symbol quantities in a downlink subframe and an uplink subframe of the frame format of the WiMAX network is 29:18, determining that a configuration ratio of subframe quantities in a downlink subframe and an uplink subframe of the half-frame format of the LTE-TDD network is 2:2, and that a frame header of the half-frame format of the LTE-TDD network has a 1003.16 µs to 1020.31 µs delay compared with a frame header of the half-frame format of the WiMAX network, and setting the symbol quantity of an uplink pilot time slot of a special subframe in the half-frame format of the LTE-TDD network to 0.

6. A base station, comprising:
a first synchronizing unit, configured to synchronize an LTE-TDD network and a WiMAX network with a same clock source;
a determining unit, configured to determine a frame format of the WiMAX network; and
a second synchronizing unit, configured to determine, according to the frame format of the WiMAX network, a half-frame format of the LTE-TDD network, a delay time between a frame header of the half-frame format of the LTE-TDD network, and a frame header of the frame format of the WiMAX network, so that a half-frame of the LTE-TDD network and a frame of the WiMAX network are synchronized.

7. The base station according to claim 8, wherein the second synchronizing unit comprises:
a first processing unit, configured to: if a configuration ratio of symbol quantities in a downlink subframe and an uplink subframe of the frame format of the WiMAX network is 35:12, determine that a configuration ratio of subframe quantities in a downlink subframe and an uplink subframe of the half-frame format of the LTE-TDD network is 3:1, and that a frame header of the half-frame format of the LTE-TDD network has a delay of 2 ms compared with a frame header of the frame format of the WiMAX network, and further configured to set a length of a downlink pilot time slot DWPTS of a special subframe in the half-frame format of the LTE-TDD network to be smaller than or equal to 9 symbols;
a second processing unit, configured to: if a configuration ratio of symbol quantities in a downlink subframe and an uplink subframe of the frame format of the WiMAX network is 32:15, determine that a configuration ratio of subframe quantities in a downlink subframe and an uplink subframe of the half-frame format of the LTE-TDD network is 3:1, and that a frame header of the half-frame format of the LTE-TDD network has a delay of 2 ms compared with a frame header of the frame format of the WiMAX network, and further configured to set a length of a DWPTS of a special subframe in the half-frame format of the LTE-TDD network to be smaller than or equal to 5 symbols;
a third processing unit, configured to: if a configuration ratio of symbol quantities in a downlink subframe and an uplink subframe of the frame format of the WiMAX network is 29:18, determine that a configuration ratio of subframe quantities in a downlink subframe and an uplink subframe of the half-frame format of the LTE-TDD network is 2:2, and that a frame header of the frame format of the LTE-TDD network has a 1 ms delay compared with a frame header of a half-frame format of the WiMAX network, and set a radio frequency channel ending position of a downlink subframe in the WiMAX network at the 27^{th} symbol of the downlink subframe; and
a fourth processing unit, configured to: if a configuration ratio of symbol quantities in a downlink subframe and an uplink subframe of the frame format of the WiMAX network is 29:18, determine that a configuration ratio of subframe quantities in a downlink subframe and an uplink subframe of the half-frame format of the LTE-TDD network is 2:2, and that a frame header of the half-frame format of the LTE-TDD network has a 1003.16 µs to 1020.31 µs delay compared with a frame header of the half-frame format of the WiMAX network, and set the symbol quantity of an uplink pilot time slot of a special subframe in the half-frame format of the LTE-TDD network to 0.

8. A communications system, comprising the base station according to claim 6 or 7.
